# EUROPEAN PATENT APPLICATION

(11) **EP 4 202 407 A1**
(43) Date of publication of application: **28.06.2023**
(21) Application number: 21857759.1
(22) Date of filing: 20.08.2021
(51) Int. Cl.: G01N 21/01

(54) **CARRYING DEVICE FOR REALIZING CHEMILUMINESCENCE REACTION, AND CHEMILUMINESCENCE ANALYZER**

(30) Priority: 20.08.2020 CN 202010845548
(71) Applicant: Chemclin Diagnostics (Shanghai) Co., Ltd., Pudong, Shanghai 201210 (CN); Chemclin Diagnostics Co., Ltd., Beijing 100094 (CN)
(72) Inventor: LIAN, Zifu, Shanghai 200131 (CN); WU, Dongyang, Beijing 100094 (CN); LI, Lin, Beijing 100094 (CN)
(74) Representative: Cabinet Laurent & Charras
(86) International application number: PCT/CN2021/113727
(87) International publication number: WO 2022/037671

(57) **Abstract**

A carrying device (10) for realizing chemiluminescence reaction and a chemiluminescence analyzer are provided. The carrying device (10) is provided with a plurality of positions at least including a loading position (101) where a reaction vessel makes contact with the carrying device (10); a sample position (102) where the sample to be detected is added into the reaction vessel; a reagent adding position (103) where the reagent is added into the reaction vessel; a detection position (104) where a chemiluminescence signal from the reaction vessel is detected; and an unloading position (105) where the reaction vessel is separated from the carrying device (10). The reaction vessel traverses the positions on the carrying device (10), and the chemiluminescence reaction is realized and the detection of the chemiluminescent signal is detected during the process of the reaction vessel from making contact with the carrying device (10) to separation from the carry device. By using the carrying device (10), there is no need to move the reaction vessel between different devices, thus the structure of the device is simplified, which helps to reduce the volume of the device and is more conducive to adapting to narrow space in the emergency scenarios and increasing the utilization rate.

## Description

### CROSS-REFERENCE TO RELATED APPLICATIONS

This application claims priority to Chinese Patent Application submitted to the China National Intellectual Property Administration on August 20, 2020, with the application number of 202010845548.1 and the title of the application of "carrying device for realizing chemiluminescence reaction and chemiluminescence analyzer". The disclosures of the aforementioned application are hereby incorporated in their entireties.

### TECHINCAL FIELD

Embodiments of the present application relate to the field of medical device, in particular to a carrying device for realizing chemiluminescence reaction and a chemiluminescence analyzer.

### BACKGROUND

Various detection apparatus based on the analysis of human body fluids, such as the apparatus for blood routine examination and the apparatus for urine routine examination or the like, are available in the market.

At present, this type of medical apparatus is usually developed for institutions such as laboratory departments of large hospitals, commercial laboratories or physical examination centers. Therefore, where this kind of apparatus is used, relatively large batches of detection samples need to be processed. In order to match the needs of processing such large batches of detection samples, existing apparatus has a relatively large size, occupies a large area, and is relatively heavy and inconvenient to move.

In actual use, it is found that, in most emergency scenarios, this type of apparatus is also required for diagnostic analysis. However, the existing apparatus is too large to meet the requirements of the small space in the emergency scenarios. Besides, the number of the detection samples in the emergency scenario is usually small, therefore the large-scale apparatus cannot be fully utilized.

### SUMMARY

According to an embodiment of the present application, a carrying device for realizing chemiluminescence reaction and a chemiluminescence analyzer is provided, aiming at solving the problem in the prior art that it is difficult for the large-scale apparatus to adapt to the emergency scenario where the space is small and the utilization rate is not high.

The technical solutions in the present application to solve the aforementioned technical problems are described below.

According to an embodiment of the present application, a carrying device for realizing chemiluminescence reaction is provided with a plurality of positions at least comprising:
a loading position where a reaction vessel makes contact with the carrying device;
a sample position where sample to be detected is added into the reaction vessel;
a reagent adding position where reagent is added into the reaction vessel;
a detection position where a chemiluminescence signal from the reaction vessel is detected;
an unloading position where the reaction vessel is separated from the carrying device;
wherein the reaction vessel traverses the loading position, the sample position, the reagent adding position, the detection position and the unloading position on the carrying device, wherein chemiluminescence reaction is realized and the chemiluminescence signal is detected during a process of the reaction vessel from making contact with the carrying device to separation from the carry device.

According to an embodiment of the present application, a chemiluminescence analyzer is provided. The chemiluminescence analyzer comprises the aforementioned carrying device.

In an embodiment of the present application, the carrying device is used to realize the chemiluminescence reaction. The carrying device is provided with at least the loading position, the sample position, the reagent adding position, the detection position, and the unloading position. At the loading position, the reaction vessel is transferred to the carrying device and contact between the reaction vessel and the carrying device is realized. At the sample position, the reaction vessel can receive the sample to be detected which is the sample liquid waiting to be detected. At the reagent adding position, the reaction vessel can receive the detection reagent that will react with the sample to be detected. After the reagent adding is completed, a chemiluminescence signal from the reaction vessel can be detected and analyzed at the detection position. After the detection is completed, the reaction vessel can be moved to the unloading position and removed from the carrying device and separation of the reaction vessel from the carrying device is realized. During the process of realizing the chemiluminescence reaction and completing the detection of the chemiluminescence signal, the reaction vessel is kept on the carrying device. Therefore, when the carrying device is used for the chemiluminescence reaction and the detection of chemiluminescent signal, there is no need to move the reaction vessel between different devices, thus the structure of the device is simplified, which helps to reduce the volume of the device and is more conducive to adapting to narrow space in the emergency scenarios and increasing the utilization rate.

The above description is only a brief description of a technical solution of the present application. In order to better understand the technical means of the present application, the contents of the description can be referred to. In order to make the aforementioned contents and other purposes, features and advantages of the present application more obvious and understandable, some specific embodiments of the present application will be described below.

### BRIEF DESCRIPTION OF THE DRAWINGS

In order to more clearly illustrate embodiments of the present application or technical solutions in the prior art, the drawings used in the description of the embodiments or the prior art will be briefly introduced below. It is obvious that the accompanying drawings in the following description correspond to some embodiments of the present application and those skilled in the art can also obtain other drawings based on these drawings without creative effort.
Fig. 1 shows a first kind of carrying device according to an embodiment of the present application;
Fig. 2 shows a second kind of carrying device according to an embodiment of the present application;
Fig. 3 shows a third kind of carrying device according to an embodiment of the present application;
Fig. 4 shows a chemiluminescence analyzer according to an embodiment of the present application.

### DETAILED DESCRIPTION OF THE EMBODIMENTS

In order to make the purpose, technical solutions and advantages of embodiments of the present application clearer, the technical solutions in the embodiments of the present application will be clearly and completely described below in combination with the drawings of the embodiments of the present application. Obviously, the described embodiments are a part of embodiments of the present application, but not all embodiments. Based on the embodiments of the present application, all other embodiments obtained by a person of ordinary skill in the art without creative effort fall within the protection scope of the present application.

A carrying device for realizing chemiluminescence reaction and a chemiluminescence analyzer according to the present application will be described in detail below through specific embodiments.

The carrying device according to an embodiment of the present application can be used to carry the reaction vessel used in light initiated chemiluminescence detection. The reaction vessel is a cup-shaped container such as a cylindrical cuvette which is used for holding the sample to be detected and the detection reagent. After the sample to be detected and the detection reagent in the reaction vessel are mixed, under the irradiation of the stimulation light emitted from the optical detection system, the mixture in the reaction vessel undergoes chemical reaction after receiving the light energy so that the optical energy is converted into chemical energy and then chemical energy is converted into optical energy to emit optical signal which is detected and analyzed by the optical detection system, and the health status of the person corresponding to the sample to be detected can be determined through the analysis result.

Therefore, the function of the carrying device according to the embodiment of the present application is used to ensure that, during the entire detection process, the empty reaction vessel can be smoothly loaded onto the carrying device, and stably moved to the sample adding position, the reagent adding position and the detection position correspondingly. Moreover, after the detection is completed, it can be smoothly removed from the carrying device into the collection device for waste articles. The above processes can be all completed on the carrying device.

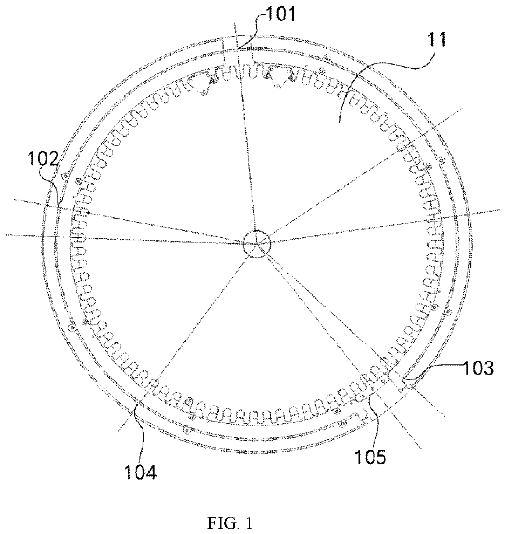

It will be illustrated in detail in combination with the following embodiments. As shown in Fig. 1, the carrying device 10 for realizing chemiluminescence reaction according to an embodiment of the present application is provided with a plurality of positions at least including a loading position 101 where a reaction vessel makes contact with the carrying device, a sample position 102 where the sample to be detected is added into the reaction vessel, a reagent adding position 103 where the reagent is added into the reaction vessel, a detecting position 104 where a chemiluminescence signal from the reaction vessel is detected, and a unloading position 105 where the reaction vessel is separated from the carrying device 10.

The reaction vessel traverses the loading position 101, the sample position 102, the reagent adding position 103, the detection position 104 and the unloading position 105 on the carrying device 10. The chemiluminescence reaction is realized and the detection of the chemiluminescent signal is detected during the process of the reaction vessel from making contact with the carrying device 10 to separation from the carry device.

Specifically, the carrying device 10 is used as a carrier for the reaction vessel and can provide multiple positions for the reaction vessel. The position refers to the working positions of the reaction vessel in different stages of the chemiluminescence reaction and detection process. As an example, the carrying device 10 can provide positions for the reaction vessel including the loading position 101, the sample position 102, the reagent adding position 103, the detection position 104, and the unloading position 105 and so on.

At the loading position 101, the vessel loading unit 201 such as a manipulator or a linkage motion mechanism can be used to regularly transfer the reaction vessels from the storage position of the vessel onto the carrying device 10 according to the set time period. In other word, the empty and clean reaction vessels are placed on the carrying device 10 at the loading position.

The sample adding unit 202 for adding the sample to be detected can be arranged at the periphery of the carrying device 10. The sample moving arm assembly of the sample adding unit 202 can suck the collected sample to be detected from the sample holder. After sucking the sample to be detected, the sample moving arm assembly moves to the sample position 102 to add the sample to be detected into the reaction vessel located at the sample position 102.

Similar to the process of adding sample, the reagent adding unit 203 for adding detection reagent can also be arranged at the periphery of the carrying device 10. When adding the detection reagent, the reaction vessel with the sample is moved to the reagent adding position 103. The reagent adding unit 203 obtains the detection reagent from the reagent tray and adds it into the reaction vessel so that a mixture of the sample and the reagent is formed. After the sample and the reagent have been incubated for a set period of time, the reaction vessel is moved to the detection position 104, and the optical detection system 204 located at the detection position 104 emits stimulation light to irradiate the mixture. Under the catalysis of the stimulation light, the sample and the reagent emit luminescence during the chemical reaction, and the luminescence can be detected and analyzed by the detector at the detection position.

After the detection and analysis, on the one hand, the reaction vessel needs to be moved away from the detection position 104 so that other reaction vessels can be moved to the detection position 104 for detection, and on the other hand, the reaction vessel containing the detected sample has become a medical waste which needs to be treated in a centralized and harmless manner according to the requirements. Therefore, the detected reaction vessel is moved to the unloading position 105. At the unloading position 105, the reaction vessel can be uploaded or removed from the carrying device 10 by the vessel unloading unit 205 at the periphery of the carrying device 10. Similar to the vessel loading unit, the vessel unloading unit can be a component such as a manipulator or a linkage mechanism. The reaction vessel can be removed into a waste collection device.

It is thus clear that when the carrying device 10 according to the embodiment of the present application is used to realize the chemiluminescence reaction, during the whole process of loading the reaction vessel onto the carrying device 10 at the loading position, adding sample at the sample adding position, adding reagent at the reagent position, detecting sample at the detection position, and unloading the reaction vessel at the unloading position, although the reaction vessel moves between the various positions, the reaction vessel is kept on the carrying device 10 and it is not necessary to move the reaction vessel to other platform or device to complete the detection process. Chemiluminescence reaction can be realized and the chemiluminescence signal can be detected during the process of the reaction vessel from contact with the carrying device 10 to separation from the carry device 10.

It should be noted that the reaction vessel can be driven by the carrying device 10 itself to move between the various positions. Alternatively, the carrying device 10 can be kept stationary and an external operating mechanism such as a manipulator, a pneumatic sucker or the like picks up the reaction vessel to move the reaction vessel to the various positions. Embodiments of the present application does not limit the moving manner of the reaction vessel.

In an embodiment of the present application, the carrying device is used to realize the chemiluminescence reaction. The carrying device is provided with at least the loading position, the sample position, the reagent adding position, the detection position, and the unloading position. Various stages of the chemiluminescence reaction and the detection can be completed at the various positions. Therefore, when the carrying device is used for the chemiluminescence reaction and the detection of chemiluminescent signal, there is no need to move the reaction vessel between different devices, thus the structure of the device is simplified, which helps to reduce the volume of the device and is more conducive to adapting to narrow space in the emergency scenarios and increasing the utilization rate.

Optionally, the carrying device 10 drives the reaction vessel to move together.

Specifically, in an embodiment, in order to move the reaction vessel between different positions, an electric motor can be used to drive the carrying device 10 to move along a set straight line or curved path. For example, the electric motor can drive the carrying device 10 to rotate. When a reaction vessel is loaded onto the carrying device 10, it can move synchronously with the carrying device 10. With the rotation of the carrying device 10, the reaction vessel can be moved to different positions at different times. Compared with using devices such as manipulators to move the reaction vessel, by configuring the reaction vessel to move synchronously with the carrying device 10, the volume of the device and the space occupation can be reduced.

Optionally, referring to Figure 1, the carrying device 10 includes a movable carrier member 11.

The reaction vessel is in continuous contact with the carrier member 1 from a moment the reaction vessel arrives at the loading position 101 until to a moment the rection vessel leaves the unloading position 105.

Specifically, as shown in Figure 1, in an embodiment, the carrying device 10 may include a movable carrier member 11. The carrier member 11 can move along a set path under the drive of a power device such as an electric motor. For example, the electric motor directly drives the carrier member 11 to rotate through a reduction mechanism, or the electric motor drives the carrier member 11 to move along a straight line through a pinion and rack mechanism. At the loading position 101, the reaction vessel is loaded onto the carrier member 11. When the carrier member 11 moves, it drives the reaction vessel to move together until the reaction vessel arrives at the unloading position 105 and is unloaded from the carrier member. As an example, in a specific implementation, the carrier member 11 may be a disk, the center of which is connected to a rotating shaft, and the electric motor may drive the rotating shaft directly or through a reducer to rotate the disk.

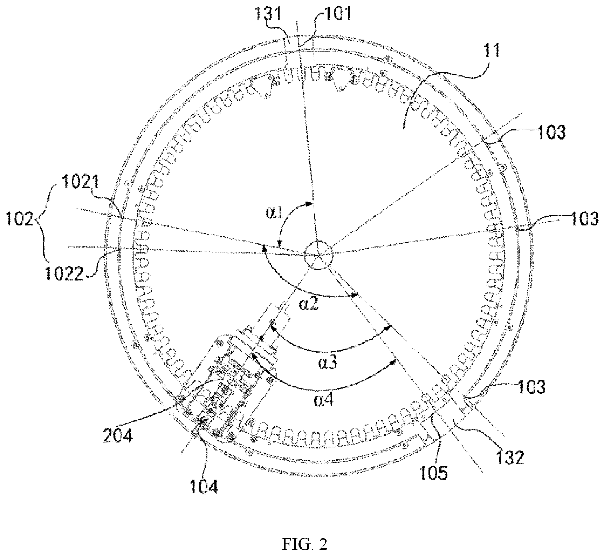

Optionally, referring to Figure 2, the carrying device 10 is connected to the optical detection system 204. The optical detection system 204 includes an optical component arranged at the detection position 104. The optical component is used to emit stimulation light to the reaction vessel and collect luminescence from the reaction vessel during the reaction.

Specifically, as shown in Figure 2, in an implementation, the optical detection system 204 is connected to the carrying device 10 and is arranged at the detection position 104. As an example, the optical component can be fixed at the detection position 104 by adjusting the connection structure, as long as the stimulation light emitted by the optical component can irradiate the sample in the reaction vessel at the detection position 104 and the luminescence from the reaction vessel can be collected and received by the optical component.

For example, a light source for emitting simulation light may be arranged at the detection position 104. The light source irradiates the reaction vessel at the detection position, and optical fibers can be used to collect the luminescence from the reaction vessel during the reaction. The collected optical signal is transmitted to the detector fixedly connected to the carrying device 10 or transmitted to the detector arranged at the periphery of the carrying device 10. Furthermore, the detector has the light source and the detection and analysis device integrated together. Optical fibers can be arranged at the detection position 104, and the stimulation light emitted by the light source is guided by the optical fibers to irradiate the reaction vessel at the detection position 104. The luminescence from the reaction vessel during the reaction can be collected, received and transmitted to the detector by the optical fibers as well. In such a case, the arrangement position of the detector is more flexible and freer.

Optionally, the optical detection system 204 further includes a detector optically coupled to the optical component. The detector receives an optical signal from the optical component and evaluates the optical signal.

Specifically, in an embodiment, the optical detection system 204 may include an optical component that emits stimulation light. Besides, the optical detection system may have a detector that is optically coupled to the optical component integrated therein. After the optical signal from the optical component irradiates into the reaction vessel, the sample in the reaction vessel emits the luminescence as being stimulated by the stimulation light. The detector can collect and receive the luminescence emitted by the sample, and analyze and evaluate the wavelength and frequency band of the luminescence. The optical component and the detector are integrated in the optical detection system 204 and optically coupled to each other, which helps to avoid the reduction of detection accuracy because of the loss of light transmission caused by the separate arrangement of the optical component and the detector.

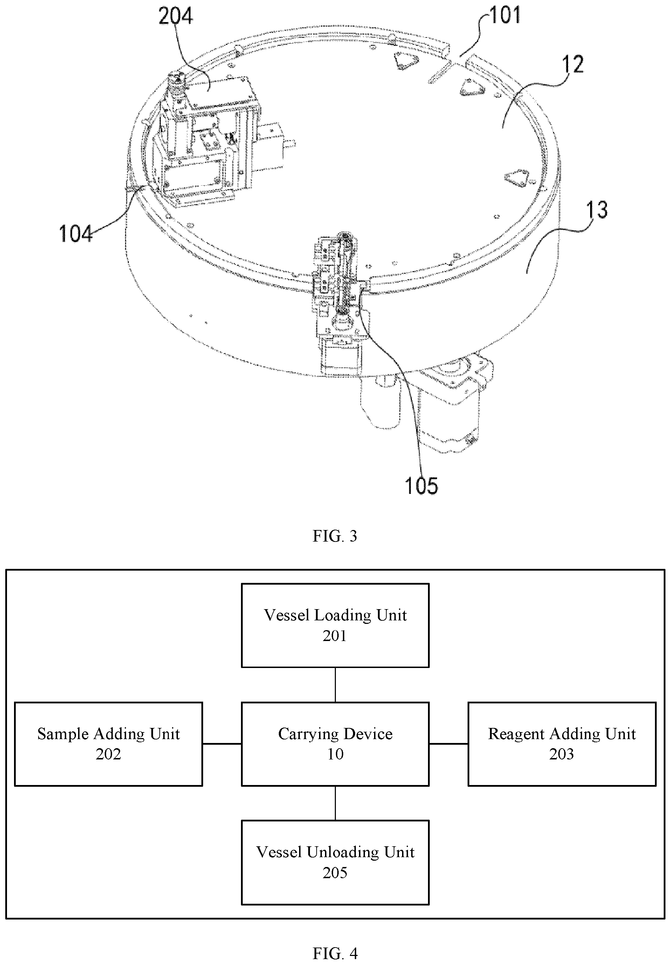

Optionally, referring to Figure 3, the detector is arranged at the cover plate 12 being stacked on the carrier member 11.

Specifically, as shown in Figure 3, in an implementation, the cover plate 12 can be provided on the carrier member 11. The cover plate 12 is basically the same shape and size as the carrier member 11 and can be slightly larger than the carrier member 11. The cover plate 12 can cover the carrier member 11 and the reaction vessels on the carrier member 11 from above. Therefore, during the chemical reaction of the sample and the reagent in the reaction vessel and the detection, the interference from ambient light can be avoided, and the accuracy of the detection result can be improved as much as possible.

Optionally, referring to Figure 3, the optical component and the detector are packaged in the housing of the optical detection system 204, and the optical detection system 204 is aligned with the detection position on the cover plate 104.

Specifically, as shown in Figure 3, in an implementation, the optical detection system 204 with an optical component and a detector being integrated and packaged together can be used for detection at the detection position 104. Since a plurality of different samples need to be detected at different times at the detection position 104, in the case that the carrier member 11 is a movable part, the carrier member 11 can move the reaction vessels containing different samples to the detection position. In this case, the optical detection system 204 can be fixed on the cover plate 12 on the carrier member 11, and the optical detection system 204 is aligned with the detection position 104. It should be understandable that in this solution, the cover plate 12 does not need to move with the carrier member 11, the optical detection system 204 and the cover plate 12 remain stationary, and an aperture through which the light passes is formed in the cover plate 12 at the position corresponding to the detection position 104. It is thus clear that in this implementation, the optical detection system 204 can be integrated on the cover plate 12 of the carrying device 10, thus a higher degree of integration can be obtained and it is more conducive to reducing the volume.

Optionally, referring to Figure 3, the carrying device 10 further includes a side enclosure wall 13. The side enclosure wall 13 is arranged in the circumferential direction of the carrier member 11.

Specifically, as shown in Figure 3, in an implementation, the movable carrier member 11 is usually driven by a drive mechanism connected to it. In this structure, the drive mechanism may be arranged under the carrier member 11. The side enclosure wall 13 can be arranged in the circumferential direction of the carrier member 11. On one hand, the side enclosure wall 13 can cover the driving mechanism so as to prevent foreign matters from entering into the driving mechanism to hinder operation of the drive mechanism. On the other hand, the side enclosure wall 13 can be used to block the ambient light by its side surrounding the circumference of the carrier member 11 as well.

Optionally, referring to Figure 3, the side enclosure wall 13 supports the cover plate 12 to be stacked on the carrier member 11.

Specifically, as shown in Figure 3, in an implementation, in the case that the side enclosure wall 13 circumferentially surrounds the carrier member 11, the top of the side enclosure wall 13 can also be connected to the cover plate 12 by screws. Therefore, by configuring the side enclosure wall to support and fix the cover plate 12 the cover plate 12 is supported on the carrier member 11 and there is no need to specially design a support structure for the cover plate 12.

Optionally, referring to Figure 2, the side enclosure wall 13 is provided with a loading channel 131 and an unloading channel 132.

At the loading position 101, the reaction vessel is moved to the carrier member 11 through the loading channel 131.

At the unloading position 105, the reaction vessel is removed from the carrier member 11 through the unloading channel 132.

Specifically, as shown in Figure 2, in an implementation, in the case where the side enclosure wall 13 is arranged in the circumferential direction of the carrier member 11, in order to ensure that the reaction vessel can be loaded and unloaded smoothly, the side enclosure wall 13 may be provided with the loading channel 131 and the unloading channel 132 which are strip grooves for example. It should be noted that the width of the loading channel 131 and the width of the unloading channel 132 may be consistent with the width of the reaction vessel, and the loading channel 131 and the unloading channel 132 both extend towards the carrier member 11. In this case, the position of the loading channel 131 is the loading position 101, and the position of the unloading channel 132 is the unloading position 105. At the loading position 101, the vessel loading unit 201 applies a force to the reaction vessel to make the reaction vessel slide along the loading channel 131 onto the carrier member 11. At the unloading position 105, the vessel unloading unit 205 applies a force to the reaction vessel to make the reaction vessel slide along the unloading channel 132 out from the carrier member 11 so that the detected reaction vessel can be removed.

Optionally, referring to Figure 2, the loading position 101, the sample position 102, the reagent adding position 103, the detection position 104, and the unloading position 105 are arranged in the circumference of the carrier member 11.

Specifically, as shown in Figure 2, in an implementation, the loading position 101, the sample position 102, the reagent adding position 103, the detection position 104 and the unloading position 105 may be arranged in the circumference of the carrier member 11. In practical applications, the aforementioned positions can be arranged in a ring in sequence according to the shape of the carrier member 11 and the detection control program. As an example, the positions are arranged in sequence at the circumference of the circular carrier member 11, or the positions are arranged at different sides of the rectangular carrier member 11. The positions can be arranged in the order of the loading position 101, the sample position 102, the reagent adding position 103, the detection position 104 and the unloading position 105, or be arranged according to other orders that are compatible with the control program. In the case that the positions are arranged in the order of the loading position 101, the sample position 102, the reagent adding position 103, the detection position 104 and the unloading position 105, there are fewer repetitive actions and fewer repeated paths when the reaction vessel is switched between the various positions, which can save detection time and improve detection efficiency.

Optionally, referring to Figure 2, the loading position 101, the sample position 102, the reagent adding position 103, the detection position 104 and the unloading position 105 are spaced from each other by preset distances. The preset distances are different from each other.

Specifically, as shown in Figure 2, in an implementation, the distances between every two positions of the loading position 101, the sample position 102, the reagent adding position 103, the detection position 104 and the unloading position 105 can be determined based on the moving speed of the carrying device 10 and the times required for various stages in the detecting process. Therefore, the distances between every two positions are not exactly the same.

For example, in the case that the various positions are arranged in sequence at the circumference of the circular carrier member 11, the distances between the positions can be determined by controlling the central angles of the sectors formed between the positions. In the case that the central angles of the sectors formed by adjacent positions are different, the distances can be different. In the case that the various positions are arranged at different sides of the rectangular carrier member 11, the distances between the positions can be designed or calculated according to the moving speed of the carrier member and the time required for various stages in the detection process.

By configuring aforementioned different preset distances between the positions, it is helpful to ensure the coordination at all positions at the same time, maintain the continuity of the detection process, and avoid the waste of time caused by interruption or stop. For example, at a certain moment, when a reaction vessel A is at the unloading position 105, there will be a reaction vessel B at the loading position 101, a reaction vessel C at the sample position 102, a reaction vessel D at the reagent adding position 103, and a reaction vessel E at the detection position 104 at the same time. The various reaction vessels can be moved to different positions according to the same process steps to perform corresponding operations. Therefore, the detection efficiency can be improved by designing the distances between the various positions in advance.

Optionally, referring to Figure 2, the carrier member 11 has a circular structure, and a plurality of receiving spaces for placing the reaction vessels are formed in the circumferential direction of the carrier member 11.

Specifically, in an implementation, a circular tray can be used as the carrier member 11, and a plurality of receiving spaces for placing the reaction vessels are formed in the circumferential direction of the circular tray. It should be noted that the number of the receiving spaces may be determined according to the reaction time and the number of single cycles. The reaction time refers to time of the reaction between the sample and the detection reagent, which also includes the time of the reaction with the universal solution in the case where the universal solution is included. The single cycle refers to a single operation cycle of the carrier member 11, that is, the total time for a reaction vessel being switched or moved between the various positions under the drive of the carrier member 11. Referring to Figure 2, a plurality of notches can be formed in the circumference of the circular tray. Each notch functions as a receiving space. The plurality of notches are evenly distributed along the circumference of the circular tray and each notch can be used to clamp a reaction vessel. When the carrier member rotates, it can drive the reaction vessels clamped in the notches to move together. When an empty notch rotates to the loading position, it can receive an empty reaction vessel through the aforementioned loading channel. When the notch carrying a reaction vessel is moved to the sample position, the reagent adding position, and detection position, sample adding, reagent adding and detection can be performed. When the notch carrying the reaction vessel moves to the unloading position, the reaction vessel can be unloaded from the notch of the carrier member through the aforementioned unloading channel and removed.

Optionally, referring to Figure 3, the side enclosure wall 13 is in an annular structure, and the carrier member 11 is embedded in the inner ring of the side enclosure wall 13.

Specifically, as shown in Figure 3, in an implementation, in the case that the aforementioned carrier member 11 is a disc-shaped part, the reaction vessel on the disc can rotate with the disk. Correspondingly, the side enclosure wall 13 may be designed as a circular and cylindrical part, and the carrier member 11 may be embedded in the inner ring of the side enclosure wall 13. In this structure, when the carrier member 11 rotates, it also drives the reaction vessels to rotate with respect to the side enclosure wall 13. Each position can be calculated and distributed based on the fixed side enclosure wall 13. In this structure, not only can the reaction vessel rotate to each position in turn, but also the structural size of the device can be taken into account.

Optionally, referring to Figure 2, the loading position 101, the sample position 102, the reagent adding position 103, the detection position 104 and the unloading position 105 are arranged in the circumferential direction of the carrier member 11.

Starting from the loading position 101, the sample position 102, the detection position 104, the unloading position 105 and the reagent adding position 103 are arranged in sequence in the counterclockwise direction.

Specifically, in an implementation, in the case that the carrier member 11 is in a circular shape and the loading position 101, the sample position 102, the reagent adding position 103, the detection position 104 and the unloading position 105 are arranged in the circumferential direction of the carrier member 11, the stationary side enclosure wall 13 can be used as a reference, and the loading position 101, the sample position 102, the reagent adding position 103, the detection position 104 and the unloading position 105 are all regarded as different marking positions around the carrier member 11 on the side enclosure wall 13.

As shown in Figure 2, in an exemplary arrangement, the loading position 101 may be regarded as a starting point, and the sample position 102, the detection position 104, the unloading position 105 and the reagent adding position 103 are arranged in sequence in a counterclockwise direction around the carrier member 11. In this way, the loading position 101 can be connected with the center of the carrier member 11 to form the first construction line, the sample position 102 can be connected with the center of the carrier member 11 to form the second construction line, the reagent adding position 103 can be connected with the center of the carrier member 11 form the third construction line, the detection position 104 can be connected with the center of the carrier member 11 to form the fourth construction line, and the unloading position 105 can be connected with the center of the carrier member 11 to form the fifth construction line. Every two construction lines and the circumference of the carrier member 11 form a sector, and the central angle of each sector can be used to determine the relative position of the corresponding two positions. In Figure 2, the first preset angle α1 between the first construction line and the second construction line, the second preset angle α2 between the second construction line and the third construction line, the third preset angle α3 between the third construction line and the fourth construction line, and the fourth preset angle α4 between the fourth construction line and the fifth construction line are shown. Th preset angles can be the same or different and can be designed or calculated according to the moving speed of the carrier member 11 and the time required for each stage in the detecting process in the actual detection demands, which is not limited in embodiments of the present application. The above sequence of positions is helpful to design a more efficient detection sequence, reduce the idle time of different positions, and thus improve the detection efficiency.

Optionally, referring to Figure 2, the sample position 102 includes the sample adding position 1021 and the sample dilution position 1022. The sample adding position 1021 and the sample dilution position 1022 are spaced from each other by a preset distance, and /or the carrying device 10 is provided with a plurality of reagent adding positions 103, and the plurality of reagent adding positions 103 are spaced from each other by preset distances.

Specifically, as shown in Figure 2, in an implementation, the sample position 102 may specifically include the sample adding position 1021 and the sample dilution position 1022. It should be noted that the empty reaction vessel may receive the sample sucked from the sample holder by the sample adding unit 202 at the sample adding position 1021, or receive the diluted sample sucked from the reaction vessel by the sample adding unit 202 at the sample dilution position 1022. The source of the diluted sample at the sample dilution position 1022 is that the reaction vessel is first added with the sample at the sample adding position 1021 and then is moved to the reagent adding position 103 for diluent adding. Next, the reaction vessel is moved to the sample dilution position 1022 so that the diluted sample is dispensed to the empty reaction vessels at the sample filling position 1021. The sample adding position 1021 and the sample dilution position 1022 are also spaced from each other by a preset distance, and this preset distance can be designed by referring to the aforementioned descriptions about other positions, which is not repeatedly described here.

Similarly, the carrying device 10 may also be provided with a plurality of reagent adding positions 103, and the plurality of reagent adding positions are spaced from each other by preset distances. Each reagent adding position 103 may be specifically used for the adding of one kind of reagent. The preset distances between the plurality of reagent adding positions 103 may be designed by referring to the aforementioned descriptions about other positions as well, which is not repeatedly described here.

Optionally, the carrying device 10 is provided with at least three reagent adding positions 103, and the preset distances between every two reagent adding positions 103 are different from each other.

Specifically, in an implementation, at least three reagent adding positions 103 may be provided on the carrying device 10 so as to match different detection items on the same carrying device 10, and the preset distances between every two reagent adding positions 103 are different from each other. Therefore, by separately and independently arranging the adding positions for different reagents, the requirements of adding different reagents at the same time can be met. In other word, different reagents for the samples to be detected can be added at different reagent adding positions, which is able to meet the demands for different detection items, thereby realizing multi-functional detections of multiple items.

Optionally, the carrying device 10 is further provided with a mixing position where the sample to be detected and the reagent in the reaction vessel are evenly mixed.

Specifically, in an implementation, a mixing position may be arranged on the supporting device 10 as well. After the reaction vessel has been added with reagents, it can be moved to the mixing position and the sample to be detected and the reagent can be evenly mixed by the shaking of the reaction vessel by a device, which improves the adequacy of chemical reaction and the accuracy of detection results. It should be noted that the mixing process can alternatively be completed during the movement of the reaction vessel to the detection position after the reagent adding is completed so that waiting time can be saved.

Optionally, the carrying device 10 further includes a vibration component, which is used to control the reaction vessel according to a preset frequency.

Specifically, in an implementation, the vibrating component, such as a linearly reciprocating micro-electric motor or an ordinary rotary electric motor, may be provided in the carrying device 10. The electric motor is arranged at the mixing position. The sample to be detected and the reagent are evenly mixed by using the electric motor to drive the reaction vessel to swing or rotate forward or reverse in a small range according to the preset frequency. It should be understandable that, alternatively, the carrier member may be controlled, during the movement of the reaction vessel to the detection position, to shake the reaction vessel forward and reverse according to the preset frequency so as to realize evenly mixing of the sample to be detected and the reagent.

Optionally, the carrying device 10 further includes an incubation module. The incubation module is used to keep the reaction vessels on the carrying device 10 at a preset temperature within a preset incubation period. The incubating module can be installed and fixed under the carrying device 10 and corresponds to the various positions of the reaction vessels. The incubating module can control the reaction speed by heating up or cooling down. For example, a PTC (Positive Temperature Coefficient) device may be used for heating, or a semiconductor cooling module may be used for cooling.

Referring to Figure 4, according to an embodiment of the present application, a chemiluminescence analyzer is provided. The chemiluminescence analyzer includes the carrying device 10 described in any of the aforementioned embodiments.

In an embodiment of the present application, the chemiluminescence analyzer is used as a medical analysis instrument and adopts the carrying device 10 in any of the aforementioned embodiments. Since the carrying device 10 has integrated the loading of the reaction vessel, the sample adding, the reagent adding, the detection, and the vessel unloading together, in the case that the device is used for a chemiluminescence analyzer, the volume of the chemiluminescence analyzer can be effectively reduced, and it is easier to place the chemiluminescence analyzer in emergency stations or emergency rooms with small space. Compared with traditional large-scale equipment, the utilization rate can be effectively improved.

It should be understandable that, as shown in Figure 4, in the chemiluminescence analyzer, the loading of the reaction vessel can be realized by the vessel loading unit 201, the adding of the sample can be realized by the sample adding unit 202, the adding of the reagent can be realized by the reagent adding unit 203, and the unloading and removing of the reaction vessel can be realized by the vessel unloading unit 205. The vessel loading unit 201, the sample adding unit 202, the reagent adding unit 203 and the vessel unloading unit 205 all work in cooperation with the carrying device 10 based on the reaction vessel.

Finally, it should also be noted that in this description, relational terms such as first and second etc. are only used to distinguish one entity or operation from another, and do not necessarily require or imply that these entities or operations must have any such actual relationship or order. Furthermore, the term "comprise", "include" or any other variation thereof is intended to cover a non-exclusive inclusion, thus a process, method, article, or device includes a set of elements includes not only those elements, but includes other elements not expressly listed as well, or includes elements inherently existed in the process, method, article, or device at well. In the case that there is no further limitations, an element defined by the phrase "comprising a ..." does not exclude the presence of additional identical elements in the process, method, article or terminal device comprising said element.

The aforementioned embodiments are only preferred embodiments of the present application, and are not intended to limit the present application. Any modifications, equivalent replacements or improvements made within the spirit and principles of the present application should be included in the protection scope of the present application.

The aforementioned implements are only specific implements of the present application, but the protection scope of the present application is not limited thereto. Any changes or substitutions that a person skilled in the art can easily think of within the technical scope disclosed by the present application should be covered within the protection scope of the present application. Therefore, the protection scope of the present application shall be subject to the protection scope of the claims.

## Claims

1. A carrying device for realizing chemiluminescence reaction, **characterized in that** the carrying device is provided with a plurality of positions at least comprising:
a loading position where a reaction vessel makes contact with the carrying device;
a sample position where sample to be detected is added into the reaction vessel;
a reagent adding position where reagent is added into the reaction vessel;
a detection position where a chemiluminescence signal from the reaction vessel is detected;
an unloading position where the reaction vessel is separated from the carrying device;
wherein the reaction vessel traverses the loading position, the sample position, the reagent adding position, the detection position and the unloading position on the carrying device, wherein chemiluminescence reaction is realized and the chemiluminescence signal is detected during a process of the reaction vessel from making contact with the carrying device to separation from the carry device.

2. The carrying device according to claim 1, **characterized in that** the carrying device drives the reaction vessel to move together.

3. The carrying device according to claim 2, **characterized in that** the carrying device comprises a movable carrier member; and
the reaction vessel is in continuous contact with the carrier member from a moment the reaction vessel arrives at the loading position until to a moment the rection vessel leaves the unloading position.

4. The carrying device according to claim 3, **characterized in that** the carrying device is connected to an optical detection system, the optical detection system including an optical component arranged at the detection position, and the optical component being configured to emit stimulation light to the reaction vessel and collect luminescence from the reaction vessel during reaction.

5. The carrying device according to claim 4, **characterized in that** the optical detection system further comprises a detector optically coupled to the optical component, the detector being configured to receive an optical signal from the optical component and evaluate the optical signal.

6. The carrying device according to claim 5, **characterized in that** the detector is arranged at a cover plate being stacked on the carrier member.

7. The carrying device according to claim 6, **characterized in that** the optical component and the detector are packaged in a housing of the optical detection system, and the optical detection system is aligned with the detection position on the cover plate.

8. The carrying device according to claim 6, **characterized in that** the carrying device further comprises a side enclosure wall arranged in a circumferential direction of the carrier member.

9. The carrying device according to claim 8, **characterized in that** the side enclosure wall supports the cover plate to be stacked on the carrier member.

10. The carrying device according to claim 8, **characterized in that** the side enclosure wall is provided with a loading channel and an unloading channel;
at the loading position, the reaction vessel is moved to the carrier member through the loading channel; and
at the loading position, the reaction vessel is removed from the carrier member through the unloading channel.

11. The carrying device according to claim 8, **characterized in that**,
the loading position, the sample position, the reagent adding position, the detection position and the unloading position are arranged in a circumference of the carrier member.

12. The carrying device according to claim 11, **characterized in that**,
the loading position, the sample position, the reagent adding position, the detection position and the unloading position are spaced from each other by preset distances, wherein the preset distances are different from each other.

13. The carrying device according to claim 12, **characterized in that**,
the carrier member has a circular structure, and a plurality of receiving spaces for placing reaction vessels are formed in a circumferential direction of the carrier member.

14. The carrying device according to claim 13, **characterized in that**,
the side enclosure wall is in an annular structure and the carrier member is embedded in an inner ring of the side enclosure wall.

15. The carrying device according to claim 14, **characterized in that**,
the loading position, the sample position, the reagent adding position, the detection position and the unloading position are arranged in a circumferential direction of the carrier member; and
starting from the loading position, the sample position, the detection position, the unloading position and the reagent adding position are arranged in sequence in a counterclockwise direction.

16. The carrying device according to any one of claims 1 to 15, **characterized in that**,
the sample position includes a sample adding position and a sample dilution position, and the sample adding position and the sample dilution position are spaced from each other by a preset distance; and/or,
the carrying device is provided with a plurality of reagent adding positions, and the plurality of reagent adding positions are spaced from each other by a preset distance.

17. The carrying device according to claim 16, **characterized in that** the carrying device is provided with at least three reagent adding positions, and preset distances between every two reagent adding positions are different from each other.

18. The carrying device according to claim 16, **characterized in that** the carrying device is further provided with a mixing position where the sample to be detected and the reagent in the reaction vessel are evenly mixed.

19. The carrying device according to claim 18, **characterized in that** the carrying device further comprises a vibrating component for controlling the reaction vessel to vibrate according to a preset frequency.

20. A chemiluminescence analyzer, **characterized in that** the chemiluminescence analyzer comprises the carrying device according to any one of claims 1 to 19.
